Europäisches Patentamt

European Patent Office

Office européen des brevets

(11) Publication number: **0 381 311**
**A1**

## EUROPEAN PATENT APPLICATION

(21) Application number: **90300121.2**

(22) Date of filing: **05.01.90**

(51) Int. Cl.⁵: **B62B 5/04, B62B 3/10**

(30) Priority: **09.01.89 GB 8900405**

(43) Date of publication of application:
**08.08.90 Bulletin 90/32**

(84) Designated Contracting States:
**BE DE DK ES FR GB IT LU NL SE**

(71) Applicant: **TROLLEY SERVICES LIMITED**
**Roman Ridge Road**
**Sheffield S9 1GB(GB)**

(72) Inventor: **Bainbridge, Barrie**
**93 Moorgate Road**
**Rotherham S60 2TZ(GB)**

(74) Representative: **Gura, Henry Alan et al**
**MEWBURN ELLIS 2 Cursitor Street**
**London EC4A 1BQ(GB)**

(54) **Security installation for wheeled trolleys.**

(57) A supermarket security installation including a floor surface with upstanding projections or ridges (30) designed to inhibit the wheeling of trolleys across them.

So that the projections or ridges (30) do not hinder or endanger a person walking across them, they are of limited height and the trolleys are designed or adapted in such a way that abutment elements (22) thereof strike the projections or ridges (30) to bring the trolleys to a halt.

FIG.1

## Security installation for wheeled trolleys.

The invention relates to a security installation for restricting the area of free movement of wheeled trolleys.

It is a particular problem that wheeled trolleys belonging to supermarkets and stores are often wheeled far away from the supermarket or store concerned and are not returned. Whatever the reason for such wheeling away, such losses of this kind can amount to a considerable financial loss if not checked in some way.

In an attempt to solve this problem some supermarkets and large stores have adopted a system whereby the use of a trolley can only be obtained on payment of a returnable deposit. However, such arrangements are difficult and expensive to operate. Constant supervision by some member of a supermarket staff is also expensive in staff wages and cannot in any case be totally effective.

The invention as claimed is intended to provide a remedy. It solves the problem of how to provide a security installation for restricting the area of free movement of wheeled trolleys in a most convenient manner.

The advantages offered by the invention are, mainly, that it provides a security installation which is totally unobtrusive until a person tries to wheel a trolley away from the area of free movement. The invention can be put into effect with relatively small expense and does not need constant care by a member of the staff. One way of carrying out the invention is described in detail below with reference to drawings which illustrate, by way of example, one specific embodiment, in which:-

Figure 1 is a perspective view of a supermarket trolley embodying the invention,

Figure 2 is a perspective view of one of the castor wheel units of the trolley,

Figure 3 is a plan view of floor covering for an area of a supermarket extending all around an area of free movement within which the trolleys may be used,

Figure 4 is a sectional view on the line 4-4 in Figure 3, and drawn to a somewhat larger scale than Figure 3,

Figure 5 is a plan view which illustrates an alternative floor covering, and

Figures 6 and 7 are views which will be referred to when describing further possible modifications.

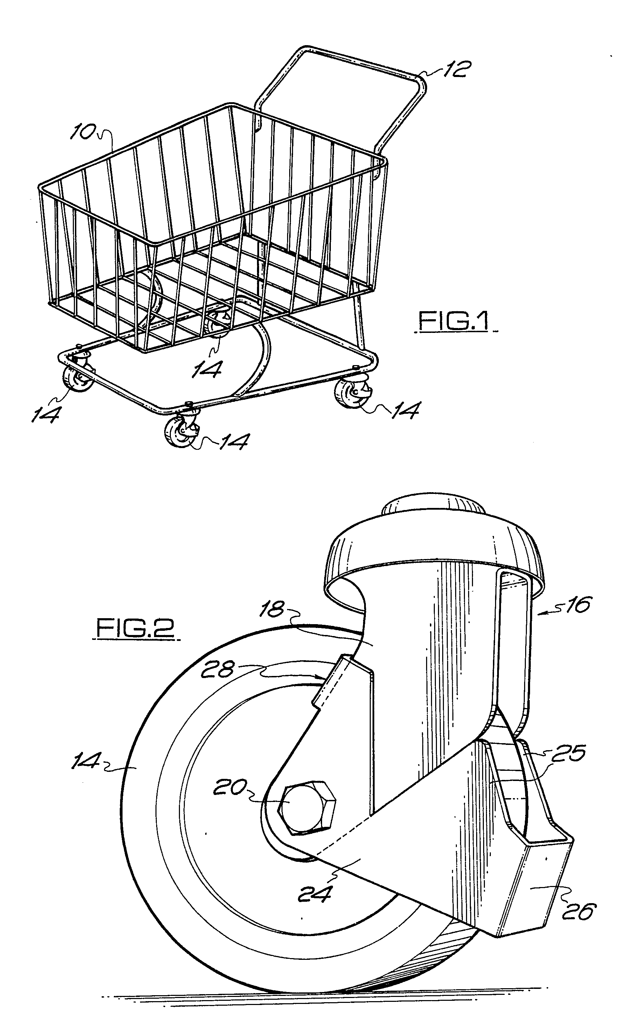

Referring now to Figure 1 of the drawings, the supermarket trolley there illustrated is the kind of trolley provided with a wire basket 10 for the carrying of goods, a handle 12 for wheeling it about and wheels 14 at each corner of an underframe (at least the front pair or the rear pair of wheels being castor wheels).

In Figure 2 there is illustrated one of the wheel units of the trolley, this including a bracket, generally indicated 16, between side plates 18 of which a wheel 14 is mounted for rotation on a bolt extending through the wheel and through the side plates of the bracket. The wheel unit also includes an abutment element, generally indicated 22, which has side plates 24 clamped against the side plates of the bracket 16 and a cross piece 26 providing a striking face closely spaced from a flat surface on which the trolley wheels are standing. The side plates 24 of the abutment element have inturned portions 28 which engage the side edges of the side plates of the bracket so that the height of the cross piece 26, being the operative part of the abutment element, is predetermined. In addition to predetermining the height of the cross piece, the inturned portions 28 of the side plates 24 resist any tendency for the abutment element to be moved out of position during service. In the illustrated embodiment, the abutment element has upstanding portions 25 formed integrally with the side plates 24, these being shaped so that they also bear against the side edges of the side plates of the bracket to assist in locking the abutment element in position.

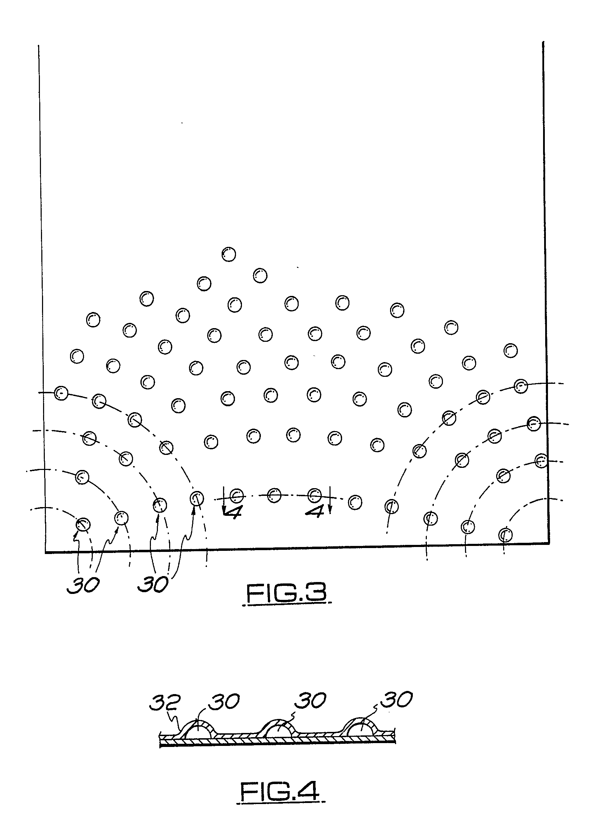

The supermarket trolley illustrated, having been adapted in the manner described by the fitment of abutment elements to at least two and preferably all four of the wheel units, is intended to be used in a supermarket having a special floor covering extending all around an area of free movement, that is to say an area within which the trolleys may legitimately be wheeled, the special floor covering being one which includes a plurality of upstanding projections or ridges of a height which does not hinder or endanger a person walking across them. Various special floor coverings may be used. That illustrated in Figures 3 and 4 is an example of one kind of floor covering which can be employed.

In Figures 3 and 4 there is illustrated an installation in which a plurality of upstanding projections 30 are spaced apart on the arcs of circles struck from the corners of the rectangular area illustrated (although in fact it is not essential that they should be arranged in this way). In the illustrated example, the projections are spaced apart at about 30 m.m. spacing.

Having regard to the fact that the surface must be such that members of the public must be able to walk safely across it when not wheeling a trolley, the height by which the projections stand proud of the otherwise flat surface is very important. In the illustrated embodiment the height of the projections is about 8 m.m. The maximum height of such projections for safe walking by the public in a supermarket is probably about 10 m.m. The projections in the illustrated embodiment are dome shaped, being semi-spherical and approximately 16 m.m. in diameter.

Depending upon the degree of flatness of the floor surface concerned the minimum spacing of the cross pieces of the abutment elements above the floor contact plane of the trolley wheels is probably about 2 m.m. and the maximum spacing probably about 20 m.m. The preferred spacing is in the region of 8 to 10 m.m. The quoted maximum spacings of the cross pieces from the floor contact plane of the trolley wheels are greater than the previously quoted maximum height of the floor surface projections because it may be that the installation concerned is one where the floor surface projections concerned are not strictly speaking on what is a normal walking surface. For example, the projections concerned may be in the nature of an upstanding ridge forming the entrance into a lift or may be in the nature of a ridge or a number of spaced ridges surrounding a supermarket car park.

The preferred angle of the striking face of each cross piece is about 65° to the horizontal plus or minus two and a half degrees, but could be any angle subject only to the fact that the abutment elements must not cause damage to the floor surface.

Figure 4 illustrates the fact that the particular floor covering described and illustrated in Figure 3 has been made by a method involving the location of the projections on a flat basal sheet (for example by having been secured by an adhesive in their required locations) and the subsequent coating of the entire top surface of the sheet with an epoxy resin material 32 which renders the surface "non-slip" for members of the public to walk on and permanently seals the upstanding projections in their required locations. The required thickness of the epoxy resin material is not critical and a suitable thickness can be arrived at by trial and experiment.

It will be understood that the finished surface is such that although the upstanding projections do not hinder or endanger a person walking across them nevertheless they are sufficient to foil any attempt to wheel the trolley previously described across them because the abutment elements associated with at least two of the wheel units are spaced from the flat floor level by a distance less than the height of said projections (and of course the optimum angle and the required height of the abutment elements in relation to the height of the projections formed on the floor covering for effective stopping of loaded or unloaded trolleys may be determined by trial and experiment).

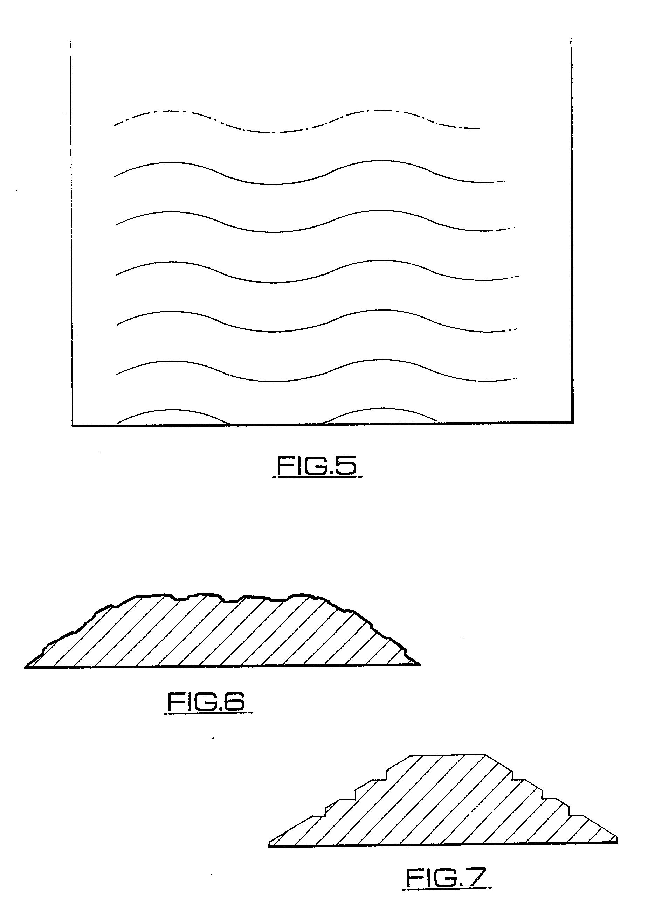

In Figures 6 and 7 there are illustrated the cross sectional shapes of elongate extruded sections which may be used to form the upstanding projections extending all around an area within which the trolleys concerned may legitimately be wheeled. That illustrated in Figure 6, which has an overall height of about 12 m.m., is intended to be used indoors and that illustrated in Figure 7, which has an overall height of about 19 m.m., is intended to be used out of doors, for example for surrounding a supermarket car park (or extending across any exits from a supermarket car park). Two or more such extruded sections extending in parallel relation to each other, may be used, and in this case it is preferable for the spacing between an adjacent pair of such sections to be spaced apart at the same spacing as that of the front wheels from the rear wheels of a supermarket trolley, the trolley having an abutment element associated with each wheel unit, to foil any attempt to lift one end and then the other end of the trolley over an upstanding projection or ridge which it has fouled.

Thus there is provided a relatively simple method whereby existing supermarket trolleys can be adapted for use in a supermarket having the type of floor covering described. However, it will be understood that new trolleys could be manufactured specifically for such use. The abutment elements could be formed integrally with the wheel brackets for example.

Various modifications may be made to the floor covering referred to. For example, instead of having upstanding projections of the kind described it could have upstanding ridges, these again being of a height which does not hinder or endanger a person walking across them but such that they prevent a supermarket trolley which has been constructed or adapted as described from being wheeled freely across them. Of course, a ridged surface could perhaps allow a trolley as described to be wheeled along the ridges but not across them. In this case such ridges could be arranged to describe the arcs of circles so that a trolley could not possibly be wheeled along them for any distance. Such a ridged surface is illustrated diagrammatically in Figure 5 by way of example. The manner in which it has been formed is not shown but it will be understood that this may be by a method similar to that previously described, that is to say by the spreading of an epoxy resin material over previously positioned elongate projections, or by any other preferred method.

## Claims

1. A security installation for restricting the area of free movement of wheeled trolleys, comprising a floor surface including upstanding projections (30) or ridges defining the limits of said area and a plurality of trolleys each having at least one abutment element (22) a striking face of which is spaced from the floor contact plane of the trolley wheels by a distance less than the height of said projections (30) or ridges, whereby movement of the trolley to said projections or ridges brings said striking face of the at least one abutment element (22) against the projections or ridges to halt the trolley.

2. A security installation according to claim 1, in which upstanding projections (30) or ridges of a walking surface stand proud of the otherwise flat surface of the floor by a height of between 5 m.m. and 20 m.m.

3. A security installation according to either one of the preceding claims, in which the upstanding projections (30) are dome shaped.

4. A security installation according to claim 3, in which the at least one abutment element (22) of each trolley has a striking face inclined at an angle in the region of 65° to the horizontal.

5. A security installation according to claim 1, in which elongate extruded sections used to form upstanding projections extending all around an area within which the trolleys concerned may have free movement have an overall height of between 9 m.m. and 25 m.m.

6. A security installation according to any one of the preceding claims, in which the striking face of each abutment element (22) is spaced from the floor contact plane of the trolley wheels by a distance of between 2 m.m. and 20 m.m.

7. A security installation according to any one of the preceding claims, in which the abutment elements (22) carried by the trolleys and spaced from the floor by a distance less than the height of the projections (30) or ridges are formed integrally with or connected to brackets (16) between side plates (18) of which the wheels (14) of the trolleys are mounted.

8. A security installation according to any one of the preceding claims, in which side plates (24) of the at least one abutment element (22) are shaped to engage with side plates (18) of an associated wheel mounting bracket (16) so that the height of the operative part of the abutment element (22) is pre-determined.

9. A method of restricting the area of free movement of a wheeled trolley to a region having its limits defined by a floor surface including upstanding projections (30) or ridges, wherein a plurality of abutment elements (22) are secured to the trolley to depend therefrom to a level above the ground contact plane of the trolley wheels for abutment with the floor surface projections or ridges at the limits of the area of free movement.

10. The method claimed in claim 9, in which each abutment element (22) is fitted by positioning side plates (24) of the element on a screw or shaft forming a spindle on which the trolley wheel rotates or is fitted on a replacement screw or shaft which is longer than the first mentioned screw or shaft to compensate for the added thickness of said side plates.

FIG.1

FIG.2

FIG.3

32    30        30        30

FIG.4

FIG.5

FIG.6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3186728 (W. M. TURLINGTON)<br>* the whole document *<br>--- | 1, 2,<br>6-10 | B62B5/04<br>B62B3/10 |
| X | US-A-3719370 (R. C. GINTICK)<br>* the whole document *<br>--- | 1, 7-10 | |
| X | US-A-3083398 (C. D. SWALM)<br>* the whole document *<br>--- | 1, 7-10 | |
| X | US-A-3272527 (F. V. MARTIN)<br>* the whole document * | 1, 7-9 | |
| A | <br>--- | 2-6, 10 | |
| A | FR-A-2222252 (C. PREVOST)<br>* page 1, line 13 - page 2, line 11; figures *<br>----- | 1, 2, 5,<br>9 | |
| | | | TECHNICAL FIELDS SEARCHED (Int. Cl.5 ) |
| | | | B62B |

The present search report has been drawn up for all claims

| Place of search | Date of completion of the search | Examiner |
|---|---|---|
| THE HAGUE | 22 MAY 1990 | FRANKS B.G. |

EPO FORM 1503 03.82 (P0401)